# EUROPEAN PATENT APPLICATION

(11) **EP 3 854 826 A1**
(43) Date of publication of application: **28.07.2021**
(21) Application number: 19881270.3
(22) Date of filing: 07.11.2019
(51) Int. Cl.: C08F 220/22, H01M 4/62, H01M 10/0562, H01B 1/06, H01B 1/10

(54) **COATED PARTICLES, POSITIVE ELECTRODE, NEGATIVE ELECTRODE, ALL-SOLID-STATE BATTERY, AND COATING COMPOSITION FOR SULFIDE-BASED ALL-SOLID-STATE BATTERIES**

(30) Priority: 08.11.2018 JP 2018210671
(71) Applicant: DAIKIN INDUSTRIES, LTD., Osaka 530-8323 (JP)
(72) Inventor: KUWAJIMA, Yoshiko, Osaka-Shi, Osaka 530-8323 (JP); SHIMOOKA, Toshiharu, Osaka-Shi, Osaka 530-8323 (JP); TANI, Akinori, Osaka-Shi, Osaka 530-8323 (JP); FUJIWARA, Kae, Osaka-Shi, Osaka 530-8323 (JP); MORITA, Masamichi, Osaka-Shi, Osaka 530-8323 (JP)
(74) Representative: Hoffmann Eitle
(86) International application number: PCT/JP2019/043679
(87) International publication number: WO 2020/095996

(57) **Abstract**

Provided is a sulfide-based particle not only causing less generation of hydrogen sulfide in response to exposure to the atmosphere, but also having excellent ionic conductivity and dispersibility in a solvent. The disclosure relates to a coated particle including the sulfide-based particle and a fluorine-containing polymer that coats a surface of the sulfide-based particle. The fluorine-containing polymer includes a structural unit (1) based on a monomer (1) represented by the following formula (1) and a structural unit (2) based on at least one selected from the group consisting of, for example, a monomer (2) represented by the following formula (2), 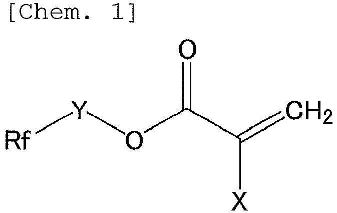 wherein, for example, X is a hydrogen atom; Y is a direct bond; and Rf is a C1-C10 linear or branched fluoroalkyl group, 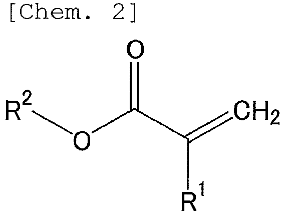 wherein, for example, R¹ is a hydrogen atom; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure.

## Description

### TECHNICAL FIELD

The disclosure relates to coated particles, positive electrodes, negative electrodes, all-solid-state batteries, and coating compositions for sulfide-based all-solid-state batteries.

### BACKGROUND ART

In recent years, sulfide-based solid electrolytes exhibiting high lithium-ion conductivity comparable to that of non-aqueous electrolytes have been developed, and development for practical use of sulfide-based all-solid-state batteries is being accelerated. In contrast, sulfide-based solid electrolytes unfortunately react with moisture in the atmosphere to cause deterioration of electrical properties and generation of hydrogen sulfide.

Patent Literature 1 discloses coating a sulfide-based solid electrolyte with a fluorine-containing compound such as (CH₃)₃-Si- (CF₂) ₆-CF₃ or a perfluoroacrylic resin.

Patent Literature 2 discloses coating sulfide-based solid electrolyte powder containing no crosslinking sulfur with a water-repellent agent containing a fluororesin.

### CITATION LIST

### - Patent Literature

Patent Literature 1: JP 2010-33732 A
Patent Literature 2: JP 2015-32528 A

### SUMMARY OF INVENTION

### - Technical Problem

The disclosure aims to provide a sulfide-based particle not only causing less generation of hydrogen sulfide in response to exposure to the atmosphere, but also having excellent ionic conductivity and dispersibility in a solvent and to provide a positive electrode, a negative electrode, and an all-solid-state battery, each containing the particle.

The disclosure also aims to provide a novel coating composition for sulfide-based all-solid-state batteries.

### - Solution to Problem

The disclosure relates to a coated particle including:
a sulfide-based particle; and
a fluorine-containing polymer that coats a surface of the sulfide-based particle;
the fluorine-containing polymer including:
   a structural unit (1) based on a monomer (1) represented by the following formula (1); and
   a structural unit (2) based on at least one selected from the group consisting of a monomer (2) represented by the following formula (2), an alkoxysilyl group-containing monomer (3) represented by the following formula (3), and a vinyl monomer,
   the formula (1) being: 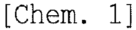 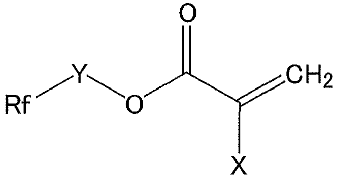 wherein X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; Y is a direct bond, a C1-C10 hydrocarbon group optionally containing an oxygen atom, a -CH₂CH₂N (R^{a}) SO₂- group (where R^{a} is a C1-C4 alkyl group), a -CH₂CH (OY¹) CH₂- group (where Y¹ is a hydrogen atom or an acetyl group), or a -(CH₂)ₙSO₂- group (where n is 1 to 10); and Rf is a C1-C10 linear or branched fluoroalkyl group,
   the formula (2) being: 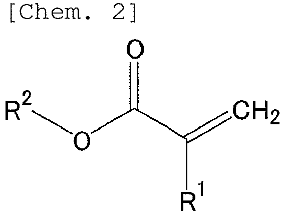 wherein R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure,
   the formula (3) being: 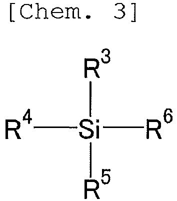 wherein R³, R⁴, and R⁵ are the same as or different from each other and are each a C1-C4 alkyl group or a C1-C4 alkoxy group; at least one selected from R³, R⁴, and R⁵ is the alkoxy group; and R⁶ is a group containing a radical polymerizable unsaturated bond.

The disclosure also relates to a positive electrode including:
the coated particle; and
a positive electrode active material.

The disclosure also relates to a negative electrode including:
the coated particle; and
a negative electrode active material.

The disclosure also relates to an all-solid-state battery including:
a positive electrode layer including the positive electrode;
a negative electrode layer including the negative electrode; and
a solid electrolyte layer including the coated particle between the positive electrode layer and the negative electrode layer.

The disclosure also relates to a coating composition for sulfide-based all-solid-state batteries, including:
a fluorine-containing polymer; and
an organic solvent,
the fluorine-containing polymer including:
   a structural unit (1) based on a monomer (1) represented by the following formula (1); and
   a structural unit (2) based on at least one selected from the group consisting of a monomer (2) represented by the following formula (2), an alkoxysilyl group-containing monomer (3) represented by the following formula (3), and a vinyl monomer,
   the formula (1) being: 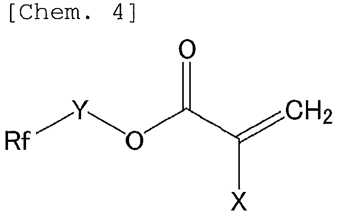 wherein X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; Y is a direct bond, a C1-C10 hydrocarbon group optionally containing an oxygen atom, a -CH₂CH₂N (R^{a})SO₂- group (where R^{a} is a C1-C4 alkyl group), a -CH₂CH (OY¹) CH₂- group (where Y¹ is a hydrogen atom or an acetyl group), or a -(CH₂)ₙSO₂- group (where n is 1 to 10); and Rf is a C1-C10 linear or branched fluoroalkyl group,
   the formula (2) being: 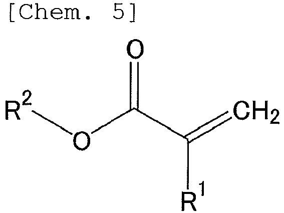 wherein R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure,
   the formula (3) being: 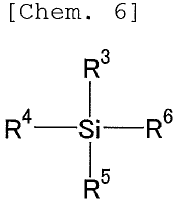 wherein R³, R⁴, and R⁵ are the same as or different from each other and are each a C1-C4 alkyl group or a C1-C4 alkoxy group; at least one selected from R³, R⁴, and R⁵ is the alkoxy group; and R⁶ is a group containing a radical polymerizable unsaturated bond.

### - Advantageous Effects of Invention

The disclosure can provide a sulfide-based particle not only causing less generation of hydrogen sulfide in response to exposure to the atmosphere, but also having excellent ionic conductivity and dispersibility in a solvent and to provide a positive electrode, a negative electrode, and an all-solid-state battery, each containing the particle.

The disclosure can also provide a novel coating composition for sulfide-based all-solid-state batteries.

### DESCRIPTION OF EMBODIMENTS

The disclosure is described in detail below.

The disclosure relates to a coated particle including a sulfide-based particle that contains a sulfur component and a fluorine-containing polymer that coats a surface of the sulfide-based particle. The fluorine-containing polymer includes a structural unit (1) based on a specific monomer (1) and a structural unit (2) based on at least one selected from the group consisting of a specific monomer (2), a specific alkoxysilyl group-containing monomer (3), and a vinyl monomer.

Since the coated particle of the disclosure includes a sulfide-based particle and a specific fluorine-containing polymer that coats a surface of the sulfide-based particle, the coated particle can reduce a reaction between the sulfide-based particle and moisture in the atmosphere in response to exposure to the atmosphere and can cause less generation of hydrogen sulfide (H₂S). This can lead to mitigation of a dry environment as well as improved workability and safety in the production process (equipment) of a sulfide-based all-solid-state battery. The coated particle of the disclosure can continue to exert these effects for a long time (e.g., 20 minutes or longer, preferably 120 minutes or longer).

Conventional coating agents are to be formed into a thick coat layer in order to ensure sufficient moisture-proof performance. Such a thick coat layer impairs and lowers the ionic conductivity. In addition, this thick coat layer decreases the dispersibility in a solvent used for battery fabrication (e.g., a solvent used for coating materials of electrodes).

The coated particle of the disclosure includes a specific fluorine-containing polymer for coating. This can ensure high moisture-proof performance and ionic conductivity (in particular, lithium-ion conductivity) even with a thin film (in a small amount) and can reduce a decrease in the dispersibility in a solvent used for battery fabrication.

The sulfide-based particle may be any solid particle containing a sulfur component. Alternatively, the sulfide-based particle may form an agglomerate with other identical sulfide-based particles. The sulfide-based particle is preferably one that functions as a solid electrolyte. The sulfide-based particle may be a material usable as a sulfide-based solid electrolyte of an all-solid-state battery. The sulfide-based particle preferably contains Li, more preferably contains Li and P.

Examples of the sulfide-based particle include particles of Li₂S-SiS₂, Li₂S-P₂S₅, Li₂S-GeS₂, Li₂S-B₂S₃, Li₂S-Ga₂S₃, Li₂S-Al₂S₃, Li₂S-GeS₂-P₂S₅, Li₂S-Al₂S₃-P₂S₅, Li₂S-P₂S₃, Li₂S-P₂S₃-P₂S₅, LiX⁰-Li₂S-P₂S₅, LiX⁰-Li₂S-SiS₂, LiX⁰-Li₂S-B₂S₃, Li₃PO₄-Li₂S-Si₂S, Li₃PO₄-Li₂S-SiS₂, LiPO₄-Li₂S-SiS, LiX⁰-Li₂S-P₂O₅, and LiX⁰-Li₃PO₄-P₂S₅. X⁰ is I, Br, or Cl.

The sulfide-based particle may also be a glass-ceramic particle that can be produced by heating an amorphous sulfide-based particle.

In particular, the sulfide-based particle is preferably a particle of Li₂S-P₂S₅.

The coated particle of the disclosure includes the sulfide-based particle and the fluorine-containing polymer that coats a surface of the sulfide-based particle. The surface of the sulfide-based particle may be partially or entirely coated with the fluorine-containing polymer.

The coated particle of the disclosure may include an agglomerate of the sulfide-based particles and the fluorine-containing polymer that coats the agglomerate.

Whether or not the surface of the sulfide-based particle is coated with the fluorine-containing polymer can be suitably examined by observing a C 1s orbital energy spectrum of a treated surface layer by X-ray photoelectron spectroscopy (XPS), for example.

Alternatively, the examination may be performed by scanning electron microscopy-energy dispersive X-ray analysis (SEM-EDX) or time-of-flight secondary ion mass spectrometry (TOF-SIMS).

The fluorine-containing polymer contains a structural unit (1) based on a monomer (1) represented by the following formula (1): 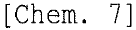 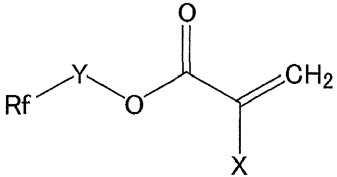 wherein X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; Y is a direct bond, a C1-C10 hydrocarbon group optionally containing an oxygen atom, a -CH₂CH₂N (R^{a}) SO₂- group (where R^{a} is a C1-C4 alkyl group), a -CH₂CH (OY¹) CH₂- group (where Y¹ is a hydrogen atom or an acetyl group), or a -(CH₂)ₙSO₂- group (where n is 1 to 10); and Rf is a C1-C10 linear or branched fluoroalkyl group.

The monomer (1) is one in which a fluoroalkyl group is bonded to acrylic acid optionally containing a substituent at the α position, directly or through a specific divalent organic group, to form an ester bond.

In the formula (1), the hydrocarbon group may be cyclic or acyclic and may be linear or branched.

In the formula (1), the fluoroalkyl group is an alkyl group in which at least one hydrogen atom is replaced by a fluorine atom and encompasses a perfluoroalkyl group in which all the hydrogen atoms are replaced by fluorine atoms.

X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group. In particular, X is preferably a hydrogen atom, a fluorine atom, a chlorine atom, a bromine atom, an iodine atom, a CF₃ group, a cyano group, an unsubstituted benzyl group, an unsubstituted phenyl group, a C1-C10 linear or branched fluoroalkyl group, or a C1-C10 linear or branched alkyl group, more preferably a hydrogen atom, a fluorine atom, a CF₃ group, or a methyl group, still more preferably a fluorine atom, a CF₃ group, or a methyl group.

In the formula (1), Rf is preferably a C4-C6 linear or branched fluoroalkyl group, particularly preferably a C4-C6 linear or branched perfluoroalkyl group in order to achieve good solubility in fluorine organic solvents to be described later, particularly in hydrofluoroethers. When Rf is a C4-C6 linear or branched fluoroalkyl group, the monomer represented by the formula (1) is preferably an α-substituted acrylic acid ester in which the α position represented by X is replaced by a group or atom other than a hydrogen atom in order to provide a coating having higher waterproof performance.

In particular, when the substituent X at the α position is a methyl group (CH₃) or a fluorine atom, a coating having good waterproof performance and impairing neither the ionic conductivity of a solid electrolyte nor the dispersibility can be formed using a low-cost material. The substituent X at the α position is particularly preferably a methyl group. Rf is preferably free from a ring structure.

In the formula (1), Y is preferably a C1-C10 hydrocarbon group optionally containing an oxygen atom, more preferably a C1-C10 alkylene group, still more preferably a C1-C5 alkylene group, further preferably a C1-C3 alkylene group. Y is preferably free from a ring structure.

Specific examples of the monomer (1) include the following. 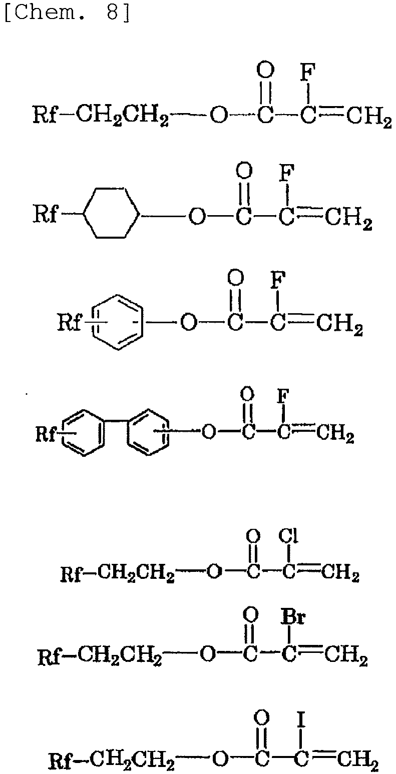 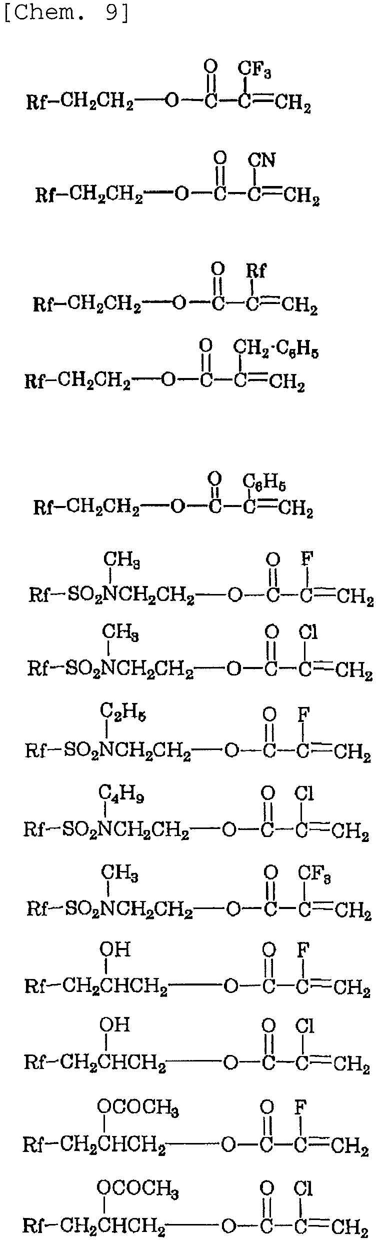 [Chem. 10] Rf-SO₂(CH₂)₃-OCO-CH=CH₂ CH₂=C(-F)-C(=O)-O-(CH₂)₂-S-Rf CH₂=C(-F)-C(=O)-O-(CH₂)₂-S-(CH₂)₂-Rf CH₂=C(-F)-C(=O)-O-(CH₂)₂- SO₂-Rf CH₂=C(-F)-C(=O)-O-(CH₂)₂-SO₂-(CH₂)₂-Rf CH₂=C(-Cl)-C(=O)-O-(CH₂)₂-S-Rf CH₂=C(-Cl)-C(=O)-O-(CH₂)₂-S-(CH₂)₂-Rf CH₂=C(-Cl)-C(=O)-O-(CH₂)₂-SO₂-Rf CH₂=C(-Cl)-C(=O)-O-(CH2)₂-SO₂-(CH₂)₂-Rf CH₂=C(-Cl)-C(=O)-O-(CH₂)₃-S-Rf CH₂=C(-Cl)-C(=O)-O-(CH₂)₃-SO₂-Rf CH₂=C(-CH₃)-C(=O)-O-(CH₂)₂-Rf CH₂=C(H)-C(=O)-O-(CH₂)₂-Rf

Preferred examples of the monomer (1) include the following.

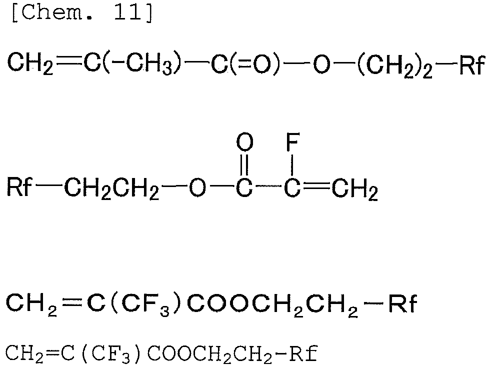

The monomer (1) may be used alone or two or more of the monomers (1) may be used as a mixture.

The fluorine-containing polymer further contains a structural unit (2) based on at least one monomer (hereinafter, also referred to as a second monomer) selected from the group consisting of a monomer (2) represented by the following formula (2), an alkoxysilyl group-containing monomer (3) represented by the following formula (3), and a vinyl monomer,
the formula (2) being: 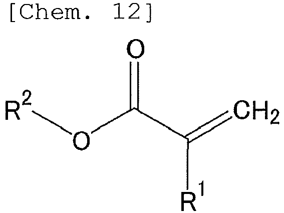 wherein R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure,
the formula (3) being: 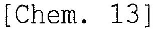 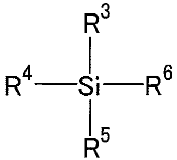 wherein R³, R⁴, and R⁵ are the same as or different from each other and are each a C1-C4 alkyl group or a C1-C4 alkoxy group; at least one selected from R³, R⁴, and R⁵ is the alkoxy group; and R⁶ is a group containing a radical polymerizable unsaturated bond.

In the formula (2), R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group. In particular, R¹ is more preferably a hydrogen atom, a fluorine atom, a CF₃ group, a CH₃ group, a C1-C10 linear or branched fluoroalkyl group, or a C1-C10 linear or branched alkyl group, still more preferably a fluorine atom, a CF₃ group, H, or CH₃, further more preferably H or CH₃.

In the formula (2), the hydrocarbon group for R² may contain in its structure one or more of at least one atom selected from the group consisting of oxygen, nitrogen, and sulfur atoms and has a carbon number of 1 or greater. The carbon number is preferably 6 or greater and may be 7 or greater. The carbon number is preferably 20 or smaller, more preferably 15 or smaller. The atom that may be contained in the hydrocarbon group for R² preferably includes at least one atom selected from the group consisting of an oxygen atom and a nitrogen atom, and is more preferably an oxygen atom.

The hydrocarbon group for R² may be, for example, a hydrocarbon ring-containing group such as an aliphatic hydrocarbon ring-containing group or an aromatic hydrocarbon ring-containing group or an aliphatic hydrocarbon group free from a ring. Examples of the aliphatic hydrocarbon ring-containing group include hetero ring-containing groups such as a cycloalkyl group and a glycidyl group and cross-linked hydrocarbon ring-containing groups such as isobornyl, bornyl, fenchyl, adamantyl, and norbornyl.

Examples of the aromatic hydrocarbon ring-containing group include a phenyl group and a benzyl group.

The hydrocarbon group is preferably a cycloalkyl group, a cross-linked hydrocarbon ring-containing group, or a benzyl group, more preferably a cross-linked hydrocarbon ring-containing group.

The hydrocarbon ring may be bonded to the carboxyl group directly or through a C1-C5 linear or branched alkylene group. The hydrocarbon ring may be substituted with a hydroxy group or an alkyl group (having a carbon number of 1 to 5, for example).

Examples of the aliphatic hydrocarbon group free from a ring include a linear or branched alkyl group optionally containing an ether bond.

In particular, the hydrocarbon group for R² is preferably an aliphatic hydrocarbon ring-containing group or an aromatic hydrocarbon ring-containing group.

The hydrocarbon group for R² may be free from a fluorine atom.

When R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure.

The monomer (2) is also preferably a compound represented by the following formula (2): 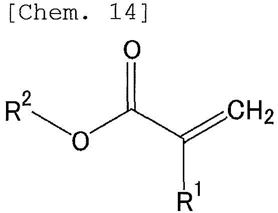 wherein R¹ is H or CH₃ and R² is a hydrocarbon group having a carbon number of 6 or greater having a ring structure.

Specific examples of the monomer (2) include the following:
CH₂=C(-F)-C(=O)-O-CH₃,
CH₂=C(-CF₃)-C(=O)-O-CH₃,
CH₂=C(-CN)-C(=O)-O-CH₃,
CH₂=C(-C₆H₅)-C(=O)-O-CH₃,
CH₂=C(-F)-C(=O)-O-CH₂CH₃,
CH₂=C(-CF₃)-C(=O)-O-CH₂CH₃,
CH₂=C(-CN)-C(=O)-O-CH₂CH₃,
CH₂=C(-C₆H₅)-C(=O)-O-CH₂CH₃,
CH₂=C(-F)-C(=O)-O-CH(CH₃)₂,
CH₂=C(-CF₃)-C(=O)-O-CH(CH₃)₂,
CH₂=C(-CN)-C(=O)-O-CH(CH₃)₂,
CH₂=C(-C₆H₅)-C(=O)-O-CH(CH₃)₂,
CH₂=C(-F)-C(=O)-O-C(CH₃)₃,
CH₂=C(-CF₃)-C(=O)-O-C(CH₃)₃,
CH₂=C(-CN)-C(=O)-O-C(CH₃)₃,
CH₂=C(-C₆H₅)-C(=O)-O-C(CH₃)₃,
CH₂=C(-F)-C(=O)-O-CH₂CH(CH₃)₂,
CH₂=C(-CF₃)-C(=O)-O-CH₂CH(CH₃)₂,
CH₂=C(-CN)-C(=O)-O-CH₂CH(CH₃)₂,
CH₂=C(-C₆H₅)-C(=O)-O-CH₂CH(CH₃)₂,
CH₂=C(-F)-C(=O)-O-CH₂CH₂OCH₃,
CH₂=C(-CF₃)-C(=O)-O-CH₂CH₂OCH₃,
CH₂=C(-F)-C(=O)-O-CH₂CH₂CH₂CH₃,
CH₂=C(-CF₃)-C(=O)-O-CH₂CH₂CH₂CH₃,
CH₂=C(-CN)-C(=O)-O-CH₂CH₂CH₂CH₃,
CH₂=C(-C₆H₅)-C(=O)-O-CH₂CH₂CH₂CH₃,
CH₂=C(-F)-C(=O)-O-CH₂CH(CH₂CH₃)CH₂CH₂CH₂CH₃,
CH₂=C(-CF₃)-C(=O)-O-CH₂CH(CH₂CH₃)CH₂CH₂CH₂CH₃,
CH₂=C(-R¹)-C(=O)-O-CH₂CH₂OCH₃,
CH₂=C(-R¹)-C(=O)-O-CH₂CH(CH₂CH₃)CH₂CH₂CH₂CH₃,
CH₂=C(-R¹)-C(=O)-O-(CH₂)₁₇CH₃,
CH₂=C(-R¹)-C(=O)-O-CH₂CH₂N(CH₃)CH₃,
CH₂=C(-R¹)-C(=O)-O-CH₂CH₂NCO, and the following:

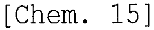

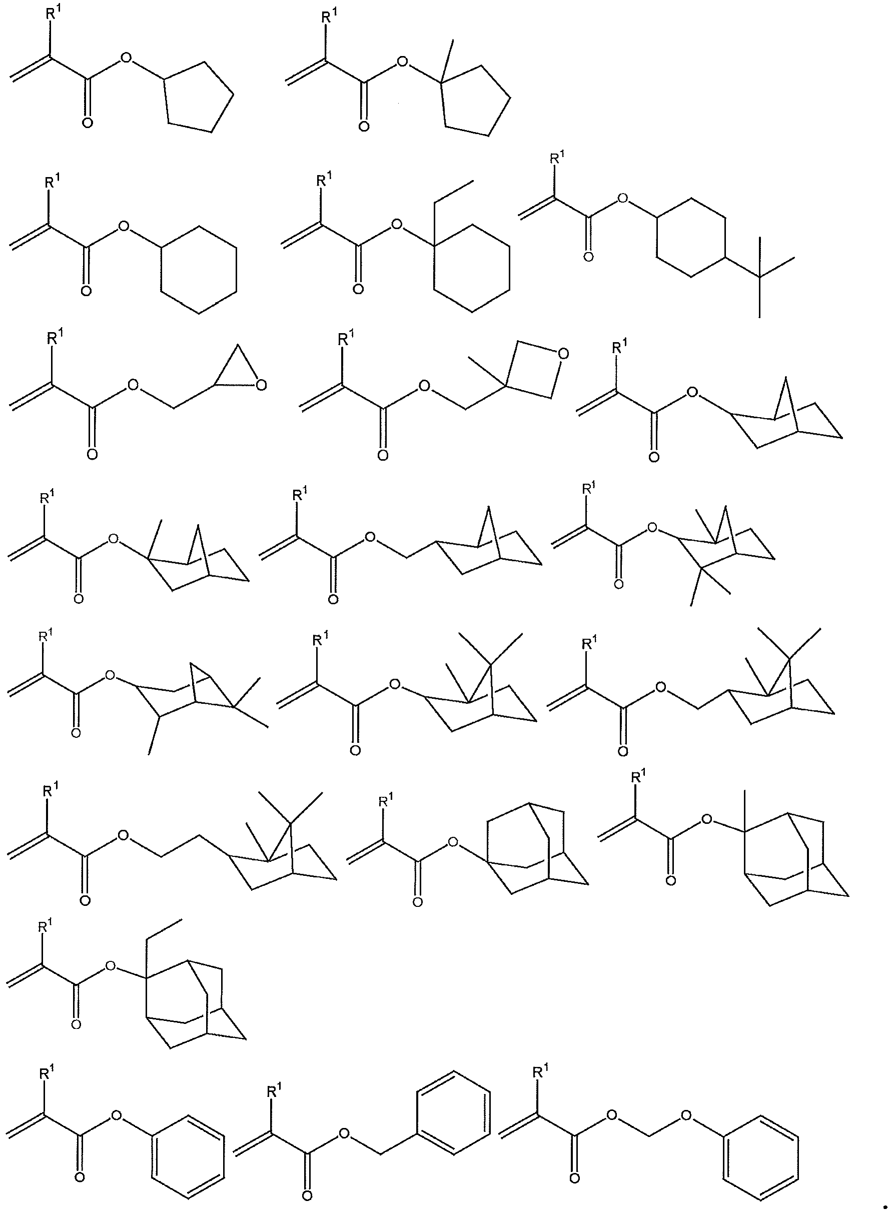

Examples of the monomer (2) also include a cyclohexyl group-containing (meth)acrylate, a benzyl group-containing (meth)acrylate, an isobornyl group-containing (meth)acrylate, a norbornyl group-containing (meth)acrylate, and an adamantyl group-containing (meth)acrylate.

An example of the cyclohexyl group-containing (meth)acrylate is a cyclohexyl methacrylate.

An example of the benzyl group-containing (meth)acrylate is a benzyl methacrylate.

Examples of the isobornyl group-containing (meth)acrylate include isobornyl (meth)acrylate and isobornyl methyl (meth)acrylate.

Examples of the norbornyl group-containing (meth)acrylate include 3-methyl-norbornylmethyl (meth)acrylate, norbornylmethyl (meth)acrylate, norbornyl (meth)acrylate, 1,3,3-trimethyl-norbornyl (meth)acrylate, myrtanylmethyl (meth)acrylate, isopinocamphenyl (meth)acrylate, and 2-{[5-(1',1',1'-trifluoro-2'-trifluoromethyl-2'-hydroxy)propyl]norbornyl} (meth)acrylate.

Examples of the adamantyl group-containing (meth)acrylate include 2-methyl-2-adamantyl (meth)acrylate, 2-ethyl-2-adamantyl (meth)acrylate, 3-hydroxy-1-adamantyl (meth)acrylate, and 1-adamantyl-α-trifluoromethyl (meth)acrylate.

The monomer (2) preferably includes any of the following.

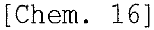

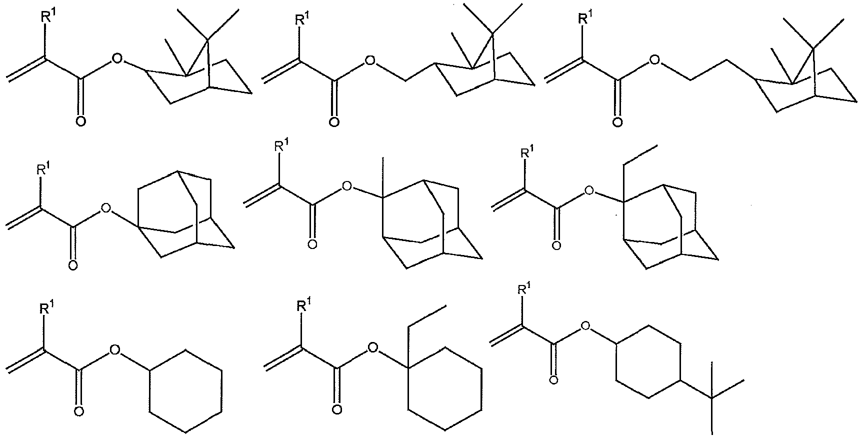

The monomer (2) preferably includes at least one selected from the group consisting of an isobornyl group-containing (meth)acrylate, a cyclohexyl group-containing (meth)acrylate, and an adamantyl group-containing (meth)acrylate, more preferably at least one selected from the group consisting of isobornyl (meth)acrylate, cyclohexyl (meth)acrylate, and 2-methyl-2-adamantyl (meth)acrylate.

In the formula (3), R³, R⁴, and R⁵ are the same as or different from each other and are each a C1-C4 alkyl group or a C1-C4 alkoxy group, at least one selected from R³, R⁴, and R⁵ being the alkoxy group. The alkoxy group is preferably a methoxy group, a methoxy group, or the like. Particularly preferably, R³, R⁴, and R⁵ are each a methoxy or ethoxy group. R⁶ is a group containing a radical polymerizable unsaturated bond.

Specific examples of the alkoxysilyl group-containing monomer (3) include monomers represented the following formulas:

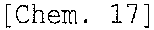

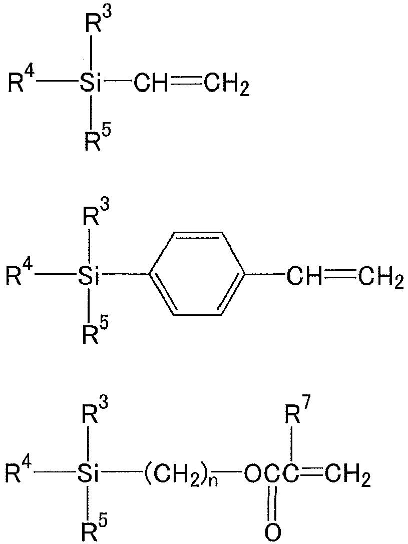

In each formula, R³, R⁴, and R⁵ are the same as those described above, R⁷ is a hydrogen atom, a methyl group, or Cl, and n is an integer of 1 to 10.

R⁷ is preferably a hydrogen atom or a methyl group, more preferably a methyl group.

Preferably, n is 1 to 5, more preferably 1 to 3.

The alkoxysilyl group-containing monomer (3) is particularly preferably the following.

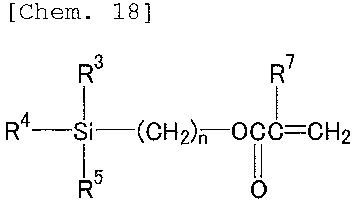

Examples of the vinyl monomer include fluorine-containing vinyl compounds such as trifluoromethylvinyl, perfluoroethylvinyl, and perfluoroethylethervinyl; and chlorine-containing vinyl compounds such as vinyl chloride and vinylidene chloride.

The second monomer may be used alone or two or more of the second monomers may be used as a mixture.

In particular, the second monomer preferably includes at least one selected from the group consisting of the monomer (2) and the alkoxysilyl group-containing monomer (3) .

The structural unit (2) is preferably in an amount of 1 to 100 parts by mass relative to 100 parts by mass of the structural unit (1). The amount is more preferably 5 parts by mass or more, still more preferably 10 parts by mass or more, while preferably 80 parts by mass or less, more preferably 70 parts by mass or less and may be 30 parts by mass or less or 20 parts by mass or less. The amount may also be 1 to 30 parts by mass.

The fluorine-containing polymer may optionally further contain a structural unit (3) based on a different monomer. The structural unit (3) represents 20% by mass or less, preferably 10% by mass or less, based on the total amount of all structural units constituting the fluorine-containing polymer.

The different monomer may be any monomer copolymerizable with the monomer (1) and the second monomer and may be selected from a variety of monomers having no negative effect on the performance of the resulting fluorine-containing polymer. Non-limiting examples of the different monomer include an aromatic alkenyl compound, a vinyl cyanide compound, a conjugated diene compound, a halogen-containing unsaturated compound, a silicon-containing unsaturated compound, an unsaturated dicarboxylic acid compound, a vinyl ester compound, an allyl ester compound, an unsaturated group-containing ether compound, a maleimide compound, a (meth)acrylic acid ester, acrolein, methacrolein, a cyclopolymerizable monomer, and a N-vinyl compound.

Each monomer may be polymerized by any method and is preferably solution-polymerized in a fluorosolvent. This method can provide a fluorine-containing polymer that is well soluble in a fluorosolvent, and thus enables a smooth radical polymerization reaction without forming precipitates.

The fluorine-containing polymer preferably has a weight average molecular weight of 3,000 to 500,000, more preferably 5,000 to 300,000. The weight average molecular weight of the fluorine-containing polymer is determined by gel permeation chromatography (GPC) (calibrated with polymethyl methacrylate standards) using a solvent mixture of HCFC-225 (AK-225 available from Asahi Glass Co., Ltd.)/hexafluoroisopropanol (in a mass ratio of 90/10) as an eluent.

The fluorine-containing polymer of the coated particle of the disclosure is preferably present in an amount of 0.01 to 40 parts by mass, more preferably 0.1 to 20 parts by mass, still more preferably 1 to 10 parts by mass relative to 100 parts by mass of the sulfide-based particle.

The coated particle of the disclosure can sufficiently reduce generation of hydrogen sulfide in response to exposure to the atmosphere even when the amount of the fluorine-containing polymer as a coating agent is relatively small.

The coated particle of the disclosure can be produced, for example, by any of the following techniques: an immersion technique in which the sulfide-based particles are immersed in a liquid prepared by dissolving or dispersing the fluorine-containing polymer in a solvent and are then dried; a spray-drying technique in which the liquid is sprayed to the sulfide-based particles and the particles are then dried; a PVD technique; and a CVD technique. The PVD technique is a technique in which a solid material is vaporized by applying physical energy to atoms of a surface of the solid material through heating the material in a vacuum (vacuum deposition) or through fast electron or ion irradiation, and the vaporized material is recombined on a substrate to form a thin film. Non-limiting examples of the PVD technique include deposition (usually, vacuum deposition) and sputtering. Specific examples of the deposition (usually, vacuum deposition) include resistive heating, application of electron beams, high-frequency heating using microwaves, application of ion beams, and other similar techniques. Specific examples of the CVD technique include plasma CVD, optical CVD, thermal CVD, and other similar techniques.

Immersion and spray drying are preferred among these.

The solvent is preferably an organic solvent in order to obtain a homogeneous solution of the fluorine-containing polymer.

Preferred examples of the organic solvent include a fluorosolvent, toluene, xylene, dibutyl ether, heptane, and n-butylbutyrate. A fluorosolvent is more preferred among these. These organic solvents may be used alone or two or more of these may be used as a mixture.

The fluorosolvent may be, for example, a hydrocarbon compound, alcohol, or ether as long as it contains a fluorine atom in the molecule and can well dissolve the fluorine-containing polymer formed. Further, the fluorosolvent may be an aliphatic or aromatic solvent.

Examples of the fluorosolvent include C5-C12 perfluoroaliphatic hydrocarbons such as perfluorohexane, perfluoromethylcyclohexane, and perfluoro-1,3-dimethylcyclohexane; polyfluoroaromatic hydrocarbons such as bis(trifluoromethyl)benzene; polyfluoroaliphatic hydrocarbons such as C₆F₁₃CH₂CH₃ (e.g., Asahiklin® AC-6000 available from Asahi Glass Co., Ltd.), 1,1,2,2,3,3,4-heptafluorocyclopentane (e.g., ZEORORA® H available from Zeon Corporation); hydrofluorocarbons (HFC) such as 1,1,1,3,3-pentafluorobutane (HFC-365mfc); hydrochlorofluorocarbons such as HCFC-225 (Asahiklin® AK225)); hydrofluoroethers (HFE) such as alkyl perfluoroalkyl ethers (the perfluoroalkyl group and the alkyl group each may be linear or branched) (e.g., perfluoropropyl methyl ether (C₃F₇OCH₃) (e.g., Novec® 7000 available from Sumitomo 3M Limited.), perfluorobutyl methyl ether (C₄F₉OCH₃) (e.g., Novec® 7100 available from Sumitomo 3M Limited.), perfluorobutyl ethyl ether (C₄F₉OC₂H₅) (e.g., Novec® 7200 available from Sumitomo 3M Limited.), and perfluorohexyl methyl ether (C₂F₅CF(OCH₃)C₃F₇) (e.g., Novec® 7300 available from Sumitomo 3M Limited.)) and CF₃CH₂OCF₂CHF₂ (e.g., Asahiklin® AE-3000 available from Asahi Glass Co., Ltd.); and 1,2-dichloro-1,3,3,3-tetrafluoro-1-propene (e.g., Vertrel® Sion available from Dupont-Mitsui Fluorochemicals Co. Ltd.). These solvents may be used alone or two or more of these may be used in combination as a mixture.

The fluorosolvent is preferably a fluoroether, more preferably a hydrofluoroether, among these. The hydrofluoroether is preferably a compound represented by the formula: CₙF₂ₙ₊₁-O-CₓH₂ₓ₊₁ (wherein n is 1 to 6, and x is 1 to 6). Examples of such a hydrofluoroether include products available from 3M such as Novec HFE-7100 (chemical formula: C₄F₉OCH₃) (boiling point: 61°C), HFE-7200 (chemical formula: C₄F₉OC₂H₅) (boiling point: 76°C), and HFE-7300 (chemical formula: C₆F₁₃OCH₃) (boiling point: 98°C) .

The organic solvent is preferably dehydrated to reduce its moisture content before use.

The coated particle of the disclosure is suitable for a solid electrolyte. The coated particle of the disclosure is also suitable for a material of an all-solid-state battery, particularly an all-solid-state secondary battery.

The disclosure also relates to a positive electrode including the above-described coated particle of the disclosure and a positive electrode active material.

In the positive electrode of the disclosure, the amount of the coated particle relative to the positive electrode active material is preferably 10 to 70% by mass, more preferably 20 to 60% by mass, still more preferably 30 to 50% by mass.

The positive electrode active material may be any material that can be used as a positive electrode active material in an all-solid-state battery.

Examples thereof include lithium cobalt oxide (LiCoO₂), lithium nickel oxide (LiNiO₂), lithium manganese oxide (LiMn₂O₄), LiNiCoO₂, lithium nickel cobalt manganese oxide (e.g., LiC0_{1/3}Ni_{1/3}Mn_{1/3}O₂), aluminum-containing lithium nickel cobalt oxide (e.g., LiNi_{0.8}Co_{0.15}Al_{0.05}O₂), a Li-Mn spinel substituted with a different element having a composition represented by Li₁₊ₓMn_{2-x-y}M_{y}O₄ (where M is one or more metal elements selected from Al, Mg, Co, Fe, Ni, and Zn), lithium titanium oxide (LiₓTiO_{y}), lithium metal phosphate (LiMPO₄, where M is Fe, Mn, Co, or Ni), transition metal oxides (e.g., V₂O₅ and MoO₃), sulfur-containing compounds (e.g., Li₂S and TiS₂), lithium silicon oxide (LiₓSi_{y}O_{z}), lithium metal (Li), lithium alloys (LiM, where M is Sn, Si, Al, Ge, Sb, or P), lithium storage intermetallic compounds (MgₓM or L_{y}Sb, where M is Sn, Ge, or Sb and L is In, Cu, or Mn), Li-rich composite oxides (Li₂MnO₃-LiMO₂) , Li₂PtO₃, LiNiVO₄, LiCoVO₄, LiCrMnO₄, LiFe(SO₄)₃, and derivatives thereof. The positive electrode active material may have any particle size and suitably has an average particle size of 0.1 to 20 µm.

The positive electrode of the disclosure may further contain a binder.

The binder is preferably a thermoplastic resin or thermosetting resin. Examples thereof include polysiloxane, polyalkylene glycol, polytetrafluoroethylene (PTFE), polyvinylidene fluoride (PVDF), polyvinyl fluoride, hydrogenated butylene rubber, polysulfide rubber, styrene-butadiene rubber (SBR), styrene-butadiene rubber/carboxymethyl cellulose (SBR/CMC), polyethylene oxide (PEO), branched PEO, polyphenylene oxide (PPO), PEO-PPO copolymers, branched PEO-PPO copolymers, and alkyl borane-containing polyether.

The positive electrode of the disclosure may further contain a conductive aid. Non-limiting examples of the conductive aid include commonly used materials such as graphite, carbon black, acetylene black (AB), Ketjen Black (KB), carbon fiber such as vapor-grown carbon fiber (VGCF), carbon nanotube (CNT), and carbon nanofiber (CNF).

The positive electrode of the disclosure may have a thickness of 10 to 500 µm, for example.

The positive electrode of the disclosure may be produced, for example, in the following way. The coated particles, the positive electrode active material, and optionally other components are mixed with a solvent, and the resulting liquid mixture (slurry) is applied to a substrate (e.g., a positive electrode current collector described later) and dried. Optionally, pressing may be performed.

Instead of the above method, blasting, aerosol deposition, cold spraying, sputtering, vapor deposition, pressing, or thermal spraying may be used.

A solvent used to produce the positive electrode is preferably an organic solvent. Examples of the organic solvent include non-polar solvents such as hexane, heptane, toluene, xylene, and decalin; tertiary amine solvents such as triethylamine; ether solvents such as dibutyl ether and cyclopentyl methyl ether; thiol solvents such as ethane mercaptan; and ester solvents such as butyl butyrate. The organic solvent is preferably dehydrated to reduce its moisture content before use.

The disclosure also relates to a negative electrode containing the above-described coated particle of the disclosure and a negative electrode active material.

In the negative electrode of the disclosure, the amount of the coated particle relative to the negative electrode active material is preferably 20 to 100% by mass, more preferably 30 to 90% by mass, still more preferably 40 to 80% by mass.

The negative electrode active material may be a known negative electrode active material usable for an all-solid-state battery, but not limited thereto.

Examples thereof include carbonaceous materials that can insert and desorb lithium ions and simple substances, alloys, and compounds of metal or metalloid that can insert and desorb lithium ions. Examples of the carbonaceous materials include graphite (e.g., natural graphite and artificial graphite), hard carbon, and amorphous carbon. Examples of the simple substances and alloys of metal or metalloid include lithium metal and lithium alloys; powder of metal such as Sn, Si, Al, Sb, Zn, or Bi; powder of a metal alloy such as Sn₅Cu₆, Sn₂Co, Sn₂Fe, Ti-Sn, or Ti-Si; other amorphous alloys; and plated alloys. Examples of the compounds include oxides, sulfides, nitrides, hydrides, and silicides (e.g., lithium silicide). Examples of the oxides include titanium oxide, lithium titanium oxide (e.g., Li_{4/3}Ti_{5/3}O), and silicon oxide. An example of the nitrides is lithium cobalt nitride (LiCoN). The negative electrode active material may be used alone or two or more of the negative electrode active materials may be used in combination. For example, silicon oxide and a carbonaceous material may be used in combination.

The negative electrode active material may have any particle size and suitably has an average particle size of 0.1 to 8 µm.

The negative electrode of the disclosure may further contain a binder and a conductive aid.

Examples of the binder and the conductive aid include binders and conductive aids usable for the positive electrode of the disclosure.

The negative electrode of the disclosure may have a thickness of 10 to 500 µm, for example.

The negative electrode of the disclosure can be produced by the same method as the method of producing the positive electrode of the disclosure.

The disclosure also relates to an all-solid-state battery that includes a positive electrode layer including the positive electrode of the disclosure, a negative electrode layer including the negative electrode of the disclosure, and a solid electrolyte layer including the coated particle of the disclosure between the positive electrode layer and the negative electrode layer.

The all-solid-state battery of the disclosure is preferably an all-solid-state secondary battery.

The positive electrode layer may include in addition to the positive electrode of the disclosure a positive electrode current collector. The positive electrode current collector may be any one used as a positive electrode current collector of an all-solid-state battery. The positive electrode current collector may be in the form of, for example, foil, plate, mesh, or agglomerate of powder. Alternatively, a material of the positive electrode current collector may be formed into a film. A positive electrode current collector in the form of foil may be electrolysis foil or etched foil, for example.

Examples of the material of the positive electrode current collector include materials stable at the redox potential of the positive electrode, such as aluminum, magnesium, stainless steel, titanium, iron, cobalt, zinc, tin, copper, nickel, germanium, indium, an alloy of any of these, and carbon.

The positive electrode current collector may have a thickness of 1 to 300 µm, for example.

The negative electrode layer may include in addition to the negative electrode of the disclosure a negative electrode current collector. Examples of the form and material of the negative electrode current collector include those described for the positive electrode current collector.

The negative electrode current collector may have a thickness of 1 to 300 µm, for example.

The solid electrolyte layer may include in addition to the coated particle of the disclosure a binder. The binder is preferably a thermoplastic resin or thermosetting resin, and examples thereof include polysiloxane, polyalkylene glycol, polyethylene, polypropylene, polytetrafluoroethylene (PTFE), polyvinylidene fluoride (PVDF), tetrafluoroethylene-hexafluoroethylene copolymers, tetrafluoroethylene-hexafluoropropylene copolymers (FEP), tetrafluoroethylene-perfluoro(alkyl vinyl ether) copolymers (PFA), vinylidene fluoride-hexafluoropropylene copolymers, vinylidene fluoride-chlorotrifluoroethylene copolymers, ethylene-tetrafluoroethylene copolymers (ETFE), polychlorotrifluoroethylene (PCTFE), vinylidene fluoride-pentafluoropropylene copolymers, propylene-tetrafluoroethylene copolymers, ethylene-chlorotrifluoroethylene copolymers (ECTFE), vinylidene fluoride-hexafluoropropylene-tetrafluoroethylene copolymers, vinylidene fluoride-perfluoromethyl vinyl ether-tetrafluoroethylene copolymers, ethylene-(meth)acrylic acid copolymers and ion (Na⁺) cross-linked products thereof, ethylene-methyl (meth)acrylate copolymers and ion (Na⁺) cross-linked products thereof, styrene-butadiene rubber (SBR), and styrene-butadiene rubber/carboxymethyl cellulose (SBR/CMC).

The solid electrolyte layer may be produced, for example, in the following way. The coated particles and optionally other components are mixed with a solvent, and the resulting liquid mixture is applied to a substrate and dried. Optionally, pressing may be performed.

Instead of the above method, blasting, aerosol deposition, cold spraying, sputtering, vapor deposition, pressing, or thermal spraying may be used.

A solvent used to produce the solid electrolyte layer is preferably an organic solvent. Examples of the organic solvent include heptane, toluene, hexane, xylene, decalin, tetrahydrofuran (THF), N-methylpyrrolidone, acetonitrile, dimethoxyethane, dimethyl carbonate, tertiary amine solvents (e.g., triethylamine), ether solvents (e.g., cyclopentyl methyl ether), thiol solvents (e.g., ethane mercaptan), and butyl butyrate. The organic solvent is preferably dehydrated to reduce its moisture content before use.

The all-solid-state battery of the disclosure may be produced, for example, in the following way. The positive electrode layer, the solid electrolyte layer, and the negative electrode layer are stacked in the stated order and optionally pressed to form a laminate, and the laminate is placed in a battery case and the battery case is optionally swaged.

The disclosure also relates to a coating composition for sulfide-based all-solid-state batteries (hereinafter, also referred to as a coating composition of the disclosure) containing a fluorine-containing polymer and an organic solvent, the fluorine-containing polymer including a structural unit (1) based on a monomer (1) represented by the following formula (1); and a structural unit (2) based on at least one selected from the group consisting of a monomer (2) represented by the following formula (2), an alkoxysilyl group-containing monomer (3) represented by the following formula (3), and a vinyl monomer,
the formula (1) being: 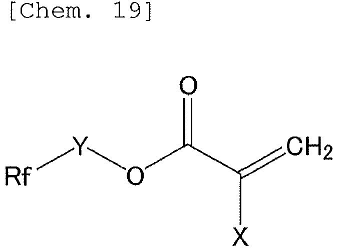 wherein X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; Y is a direct bond, a C1-C10 hydrocarbon group optionally containing an oxygen atom, a -CH₂CH₂N (R^{a}) SO₂- group (where R^{a} is a C1-C4 alkyl group), a -CH₂CH(OY¹)CH₂- group (where Y¹ is a hydrogen atom or an acetyl group), or a -(CH₂)ₙSO₂- group (where n is 1 to 10); and Rf is a C1-C10 linear or branched fluoroalkyl group,
the formula (2) being: 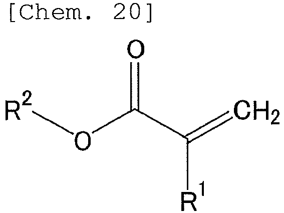 wherein R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure,
the formula (3) being: 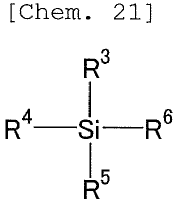 wherein R³, R⁴, and R⁵ are the same as or different from each other and are each a C1-C4 alkyl group or a C1-C4 alkoxy group; at least one selected from R³, R⁴, and R⁵ is the alkoxy group; and R⁶ is a group containing a radical polymerizable unsaturated bond.

The coating composition of the disclosure contains a specific fluorine-containing polymer. Thus, use of the composition as a coating agent for a sulfide-based solid electrolyte to be used in a sulfide-based all-solid-state battery can cause less generation of hydrogen sulfide (H₂S) in response to exposure to the atmosphere and can lead to mitigation of a dry environment as well as improved workability and safety in the production process (equipment) of a sulfide-based all-solid-state battery. The coating composition can continue to exert these effects for a long time (e.g., 20 minutes or longer, preferably 120 minutes or longer).

Further, the coating composition of the disclosure can ensure high moisture-proof performance and ionic conductivity (in particular, lithium-ion conductivity) even with a thin film (in a small amount) and can reduce a decrease in the dispersibility in a solvent used for battery fabrication.

The coating composition of the disclosure can be used as a coating agent for a sulfide-based all-solid-state battery or a component thereof (e.g., a positive electrode layer, a negative electrode layer, a solid electrolyte layer). This can prevent moisture from entering the all-solid-state battery or component thereof. Thus, deterioration of the performance due to moisture can be prevented not only during the production of the all-solid-state battery or component thereof but also after the production thereof.

The fluorine-containing polymer in the coating composition of the disclosure may be similar to the fluorine-containing polymer of the coated particle of the disclosure and the same applies to preferred examples thereof.

Examples of the organic solvent in the coating composition of the disclosure include those mentioned as examples of the organic solvent usable to produce the coated particle of the disclosure and the same applies to preferred examples thereof.

In the coating composition of the disclosure, the fluorine-containing polymer is preferably dissolved in the organic solvent.

The coating composition of the disclosure preferably contains the fluorine-containing polymer in an amount of 0.001 to 30% by mass relative to the combined amount of the fluorine-containing polymer and the organic solvent. The amount thereof is more preferably 0.01% by mass or more, still more preferably 0.05% by mass or more, while more preferably 20% by mass or less, still more preferably 10% by mass or less, particularly preferably 5% by mass or less.

The coating composition of the disclosure is intended to be used for a sulfide-based all-solid-state battery, preferably for a sulfide-based all-solid-state secondary battery.

As described above, the coating composition of the disclosure may be used as a coating agent for a sulfide-based solid electrolyte to be used in a sulfide-based all-solid-state battery, as a coating agent for a sulfide-based all-solid-state battery, or as a coating agent for a component of a sulfide-based all-solid-state battery.

When used as a coating agent for a component of a sulfide-based all-solid-state battery, the coating composition of the disclosure is preferably used as a coating agent for components including the sulfide-based solid electrolyte (e.g., a positive electrode, a negative electrode, and a solid electrolyte layer).

The coating composition of the disclosure may be used for a material (e.g., powder) of a sulfide-based solid electrolyte or may be used for a workpiece of a sulfide-based all-solid-state battery or component thereof in any stage of the production of the sulfide-based all-solid-state battery or component thereof.

When used for a sulfide-based all-solid-state battery or component thereof, the coating composition may be used for a workpiece of the all-solid-state battery during its production, the produced all-solid-state battery, a workpiece of the component during their production, or the produced component.

The coating composition of the disclosure may be used for an object by any technique by which the fluorine-containing polymer can be stuck to the object. For example, the object is immersed in the coating composition of the disclosure and then dried or the coating composition of the disclosure is sprayed to the object and then dried.

The coating composition of the disclosure may be used for an object, for example, as follows: (1) a sulfide-based solid electrolyte powder, which is a material, is immersed in the coating composition of the disclosure or the coating composition of the disclosure is sprayed to the sulfide-based solid electrolyte powder, and then drying is performed; (2) upon applying or drying a sulfide-based solid electrolyte-containing slurry for forming a positive electrode, negative electrode, or solid electrolyte layer, the coating composition of the disclosure is sprayed to the film, and then drying is performed; (3) a produced positive electrode, negative electrode, or solid electrolyte layer is immersed in the coating composition of the disclosure or the coating composition of the disclosure is sprayed thereto, and then drying is performed; and (4) a produced sulfide-based all-solid-state battery is immersed in the coating composition of the disclosure or the coating composition of the disclosure is sprayed to the produced battery, and then drying is performed.

In a preferred embodiment, the disclosure relates to a method for producing a coated particle including using the coating composition of the disclosure for a sulfide-based particle.

In another preferred embodiment, the disclosure relates to a method for producing a sulfide-based all-solid-state battery or component thereof including: forming the sulfide-based all-solid-state battery or component thereof using a sulfide-based solid electrolyte; and using the coating composition of the disclosure for a workpiece of the all-solid-state battery or component thereof during its production or to the produced all-solid-state battery or component thereof.

### EXAMPLES

The disclosure is more specifically described with reference to examples, but the examples are not intended to limit the disclosure.

### <Production of sulfide-based solid electrolyte>

Lithium sulfide (Li₂S) powder and phosphorus pentasulfide (P₂S₅) powder were weighed and mixed in a glove box filled with Ar gas such that the molar ratio of Li₂S:P₂S₅ was 75:25. The mixture was mechanically milled with a planetary ball mill (45-mL zirconia vessel, zirconia balls (ϕ = 10 mm × 10)) at a rotational speed of 370 rpm for 40 hours. Thus, solid electrolyte particles (powder) were obtained.

### <Production of polymer-coated particles>

The following fluorine-containing polymers were used in the production examples.

Fluorine-containing polymer 1: a copolymer of perfluorohexylethyl methacrylate (CH₂=C (CH₃) COOCH₂CH₂C₆F₁₃, hereinafter, abbreviated as "Rf(C6)methacrylate")/isobornyl methacrylate (hereinafter, abbreviated as "iBMA") in a mass ratio of 100/14.3 (polymer weight average molecular weight: 115500);
Fluorine-containing polymer 2: a copolymer of Rf(C6)methacrylate/iBMA/3-(trimethoxysilyl)propyl methacrylate (hereinafter, abbreviated as "TMSMA") in a mass ratio of 100/14.49/2.373 (polymer weight average molecular weight: 118800);
Fluorine-containing polymer 3: a copolymer of Rf(C6)methacrylate/butyl methacrylate (hereinafter, abbreviated as "BMA") in a mass ratio of 100/15.2 (polymer weight average molecular weight: 115000);
Fluorine-containing polymer 4: a copolymer of Rf(C6)methacrylate/iBMA in a mass ratio of 100/66.67 (polymer weight average molecular weight: 138000)
Fluorine-containing polymer 5: a copolymer of (perfluorohexyl)ethyl α-fluoroacrylate (CH₂=C(F)COOCH₂CH₂C₆F₁₃)/2-methyl-2-adamantyl methacrylate in a mass ratio of 100/25.0 (polymer weight average molecular weight: 105500); and
Fluorine-containing polymer 6: a copolymer of (perfluorobutyl)ethyl α-trifluoromethylacrylate (CH₂=C(CF₃)COOCH₂CH₂C₄F₉/cyclohexyl methacrylate in a mass ratio of 100/5 (polymer weight average molecular weight: 182900)

The operations described below were all performed in a dried box in which the dew point was controlled to -60°C and the solvents to be used were dehydrated in advance, unless otherwise stated.

### Production Examples 1 to 12 and Comparative Production Examples 1 and 2

A coating solution having a solid concentration controlled as shown in Table 1 was prepared using one of the fluorine-containing polymers and a HFE-7200 solvent. Then, 21 g of the coating solution and 9 g of the solid electrolyte powder obtained above were put into a blender mixer and stirred. The treated powder was dried to remove the solvent. Thus, polymer-coated particles were obtained.

### Production Examples 13 to 15

A coating solution having a solid concentration controlled as shown in Table 1 was prepared using the fluorine-containing polymer 4 and heptane. Then, 21 g of the coating solution and 9 g of the solid electrolyte powder obtained above were put into a blender mixer and stirred. The treated powder was dried to remove the solvent. Thus, polymer-coated particles were obtained.

### Production Example 16

A coating solution having a solid concentration controlled as shown in Table 1 was prepared using the fluorine-containing polymer 5 and a HFE-7200 solvent. Then, 21 g of the coating solution and 9 g of the solid electrolyte powder obtained above were put into a blender mixer and stirred. The treated powder was dried to remove the solvent. Thus, polymer-coated particles were obtained.

### Production Example 17

A coating solution having a solid concentration controlled as shown in Table 1 was prepared using the fluorine-containing polymer 6 and a HFE-7200 solvent. Then, 21 g of the coating solution and 9 g of the solid electrolyte powder obtained above were put into a blender mixer and stirred. The treated powder was dried to remove the solvent. Thus, polymer-coated particles were obtained.

**[Table 1]**

| | Fluorine-containing polymer | Solid concentration of polymer (% by weight) |
|---|---|---|
| Production Example 1 | 1 | 0.01 |
| Production Example 2 | | 0.1 |
| Production Example 3 | | 0.5 |
| Production Example 4 | | 1 |
| Production Example 5 | | 2 |
| Production Example 6 | | 5 |
| Production Example 7 | 2 | 0.01 |
| Production Example 8 | | 0.1 |
| Production Example 9 | | 0.5 |
| Production Example 10 | | 1 |
| Production Example 11 | | 2 |
| Production Example 12 | | 5 |
| Comparative Production Example 1 | 3 | 0.5 |
| Comparative Production Example 2 | 3 | 10 |
| Production Example 13 | 4 | 10 |
| Production Example 14 | | 20 |
| Production Example 15 | | 30 |
| Production Example 16 | 5 | 0.001 |
| Production Example 17 | 6 | 1 |

### Examples 1 to 17

The polymer-coated particles obtained in Production Examples 1 to 17 were subjected to measurement of ionic conductivity, measurement of H₂S generation, and evaluation of dispersibility in an electrolyte coating material in the following way. The results are shown in Table 2.

### <Measurement of ionic conductivity>

The polymer-coated particles in an amount of 100 mg were weighed in a glove box filled with Ar gas. The particles were pelletized under a pressure of 4.3 ton/cm² in a pelletizer that can produce pellets having a surface area of 1 cm². The resulting pellets were subjected to measurement of ionic conductivity by an AC impedance method.

### <Measurement of H₂S generation>

The polymer-coated particles in an amount of 100 mg were exposed to an environment at a temperature of 25°C and a relative humidity of 40% in a desiccator. Then, the particles were subjected to measurement of hydrogen sulfide generation after 20-minute exposure and 120-minute exposure with a hydrogen sulfide sensor.

### <Evaluation of dispersibility>

First, 49% by mass of the polymer-coated particles, 1% by mass of styrene-butadiene rubber (SBR), and 50% by mass of heptane were mixed. Then, the mixture was ultrasonically treated (37 kHz) for one hour. Thus, an electrolyte coating material was prepared. The electrolyte coating material was applied in the form of an aluminum foil film. Visual observation was performed and those uniformly applied were evaluated as good, while those non-uniformly applied were evaluated as poor.

### Comparative Example 1

Measurement of ionic conductivity, measurement of H₂S generation, and evaluation of dispersibility were performed as in Example 1, except that solid electrolyte particles used were not coated with a polymer. The results are shown in Table 2.

### Comparative Examples 2 and 3

Measurement of ionic conductivity, measurement of H₂S generation, and evaluation of dispersibility in an electrolyte coating material were performed as in Example 1, except that the polymer-coated particles obtained in Comparative Production Example 1 or 2 were used. The results are shown in Table 2.

**[Table 2]**

| | Solid electrolyte | Ionic conductivity (S/cm) | Generation of H2S (ppm) | | Dispersibility in electrolyte coating material |
|---|---|---|---|---|---|
| | | | After 20-minute exposure | After 120-minute exposure | |
| Example 1 | Production Example 1 | 1.0 × 10-3 | 20 | 139 | Good |
| Example 2 | Production Example 2 | 9.8 × 10-4 | 13 | 95 | Good |
| Example 3 | Production Example 3 | 9.0 × 10-4 | 10 | 73 | Good |
| Example 4 | Production Example 4 | 8.1 × 10-4 | 7 | 55 | Good |
| Example 5 | Production Example 5 | 7.2 × 10-4 | 5 | 40 | Good |
| Example 6 | Production Example 6 | 5.8 × 10-4 | 2 | 28 | Good |
| Example 7 | Production Example 7 | 1.0 × 10-3 | 20 | 100 | Good |
| Example 8 | Production Example 8 | 9.8 × 10-4 | 13 | 83 | Good |
| Example 9 | Production Example 9 | 8.8 × 10-4 | 10 | 65 | Good |
| Example 10 | Production Example 10 | 8.0 × 10-4 | 7 | 49 | Good |
| Example 11 | Production Example 11 | 7.1 × 10-4 | 5 | 32 | Good |
| Example 12 | Production Example 12 | 5.6 × 10-4 | 2 | 25 | Good |
| Comparative Example 1 | None | 1.1 × 10-3 | >100 | - | Good |
| Comparative Example 2 | Comparative Production Example 1 | 8.9 × 10-4 | >100 | - | Good |
| Comparative Example 3 | Comparative Production Example 2 | 1.9 × 10-4 | 20 | >150 | Poor |
| Example 13 | Production Example 13 | 5.6 × 10-4 | 13 | 102 | Good |
| Example 14 | Production Example 14 | 5.3 × 10-4 | 10 | 93 | Good |
| Example 15 | Production Example 15 | 5.0 × 10-4 | 8 | 60 | Good |
| Example 16 | Production Example 16 | 8.2 × 10-4 | 9 | 70 | Good |
| Example 17 | Production Example 17 | 7.4 × 10-4 | 5 | 50 | Good |

## Claims

1. A coated particle comprising:
a sulfide-based particle; and
a fluorine-containing polymer that coats a surface of the sulfide-based particle;
the fluorine-containing polymer including:
a structural unit (1) based on a monomer (1) represented by the following formula (1); and
a structural unit (2) based on at least one selected from the group consisting of a monomer (2) represented by the following formula (2), an alkoxysilyl group-containing monomer (3) represented by the following formula (3), and a vinyl monomer,
the formula (1) being: 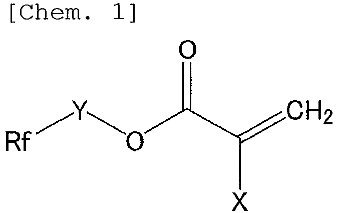 wherein X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; Y is a direct bond,
a C1-C10 hydrocarbon group optionally containing an oxygen atom, a -CH₂CH₂N (R^{a}) SO₂- group (where R^{a} is a C1-C4 alkyl group), a -CH₂CH(OY¹)CH₂- group (where Y¹ is a hydrogen atom or an acetyl group), or a -(CH₂)ₙSO₂- group (where n is 1 to 10); and Rf is a C1-C10 linear or branched fluoroalkyl group,
the formula (2) being: 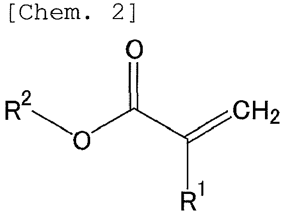 wherein R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure,
the formula (3) being: 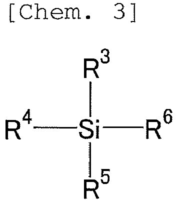 wherein R³, R⁴, and R⁵ are the same as or different from each other and are each a C1-C4 alkyl group or a C1-C4 alkoxy group; at least one selected from R³, R⁴, and R⁵ is the alkoxy group; and R⁶ is a group containing a radical polymerizable unsaturated bond.

2. A positive electrode comprising:
the coated particle according to claim 1; and
a positive electrode active material.

3. A negative electrode comprising:
the coated particle according to claim 1; and
a negative electrode active material.

4. An all-solid-state battery comprising:
a positive electrode layer including the positive electrode according to claim 2;
a negative electrode layer including the negative electrode according to claim 3; and
a solid electrolyte layer including the coated particle according to claim 1 between the positive electrode layer and the negative electrode layer.

5. A coating composition for sulfide-based all-solid-state batteries, comprising:
a fluorine-containing polymer; and
an organic solvent,
the fluorine-containing polymer including:
a structural unit (1) based on a monomer (1) represented by the following formula (1); and
a structural unit (2) based on at least one selected from the group consisting of a monomer (2) represented by the following formula (2), an alkoxysilyl group-containing monomer (3) represented by the following formula (3), and a vinyl monomer,
the formula (1) being: 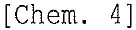 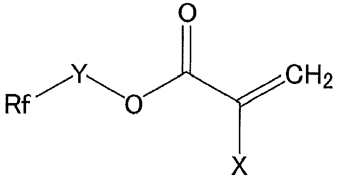 wherein X is a hydrogen atom, a fluorine atom, a chlorine atom, a bromine atom, an iodine atom, a CFX¹X² group (where X¹ and X² are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; Y is a direct bond, a C1-C10 hydrocarbon group optionally containing an oxygen atom, a -CH₂CH₂N (R^{a}) SO₂- group (where R^{a} is a C1-C4 alkyl group), a -CH₂CH(OY¹)CH₂- group (where Y¹ is a hydrogen atom or an acetyl group), or a -(CH₂)ₙSO₂- group (where n is 1 to 10); and Rf is a C1-C10 linear or branched fluoroalkyl group,
the formula (2) being: 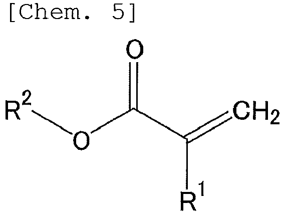 wherein R¹ is a hydrogen atom, a fluorine atom, a chlorine atom, a bromine atom, an iodine atom, a CFX³X⁴ group (where X³ and X⁴ are the same as or different from each other and are each a hydrogen atom, a fluorine atom, or a chlorine atom), a cyano group, a C1-C21 linear or branched fluoroalkyl group, a substituted or unsubstituted benzyl group, a substituted or unsubstituted phenyl group, or a C1-C20 linear or branched alkyl group; R² is a hydrocarbon group having a carbon number of 1 or greater optionally containing in its structure one or more of at least one atom selected from the group consisting of oxygen, nitrogen, and sulfur atoms; and when R¹ is H or CH₃, R² is a hydrocarbon group having a carbon number of 3 or greater containing in its structure one or more of at least one atom selected from the group consisting of oxygen, nitrogen, and sulfur atoms or a hydrocarbon group having a carbon number of 6 or greater having a ring structure,
the formula (3) being: 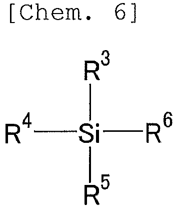 wherein R³, R⁴, and R⁵ are the same as or different from each other and are each a C1-C4 alkyl group or a C1-C4 alkoxy group; at least one selected from R³, R⁴, and R⁵ is the alkoxy group; and R⁶ is a group containing a radical polymerizable unsaturated bond.
